# FASCICULE DE BREVET EUROPEEN

(11) **EP 3 804 360 B1**
(45) Date de publication et mention de la délivrance du brevet: **06.03.2024**
(21) Numéro de dépôt: 19724217.5
(22) Date de dépôt: 20.05.2019
(51) Int. Cl.: H04W 4/02, H04W 4/40, H04W 4/80, B60R 25/24, G01S 5/02, G07C 9/00, G01S 5/00

(54) **PROCEDE DE DETECTION D'UN IDENTIFIANT A L'INTERIEUR OU A L'EXTERIEUR D'UN VEHICULE AUTOMOBILE**
VERFAHREN ZUR ERKENNUNG EINER KENNUNG INNERHALB ODER AUSSERHALB EINES KRAFTFAHRZEUGS
METHOD OF DETECTING AN IDENTIFIER INSIDE OR OUTSIDE AN AUTOMOTIVE VEHICLE

(30) Priorité: 05.06.2018 FR 1854887
(43) Date de publication de la demande: 14.04.2021
(73) Titulaire: Valeo Comfort and Driving Assistance, 94000 Créteil (FR)
(72) Inventeur: BOURASSI, Abdelhafid, 94046 Créteil CEDEX (FR)
(74) Mandataire: Delaval, Guillaume Laurent
(86) Numéro de dépôt international: PCT/EP2019/062991
(87) Numéro de publication internationale: WO 2019/233758

(56) Documents cités:
- EP-A1- 1 623 893
- WO-A1-2017/191480
- FR-A1- 3 047 085
- US-A1- 2014 188 309
- ISHIDA SHIGEMI ET AL: "Proposal of Separate Channel Fingerprinting Using Bluetooth Low Energy", 2016 5TH IIAI INTERNATIONAL CONGRESS ON ADVANCED APPLIED INFORMATICS (IIAI-AAI), IEEE, 10 juillet 2016 (2016-07-10), pages 230-233, XP032953970, DOI: 10.1109/IIAI-AAI.2016.22
- YUAN ZHUANG ET AL: "Smartphone-Based Indoor Localization with Bluetooth Low Energy Beacons", SENSORS, vol. 16, no. 5, 26 avril 2016 (2016-04-26) , page 596, XP055553388, DOI: 10.3390/s16050596

## Description

### DOMAINE TECHNIQUE DE L'INVENTION

La présente invention concerne un procédé de détection d'un identifiant à l'intérieur ou à l'extérieur d'un véhicule automobile.

La présente invention concerne également un dispositif de détection d'un identifiant à l'intérieur ou à l'extérieur d'un véhicule automobile associé. Elle trouve une application particulière mais non limitative dans le domaine des véhicules automobiles.

### ARRIÈRE-PLAN TECHNOLOGIQUE DE L'INVENTION

Dans le domaine des véhicules automobiles, il existe des procédés de détection d'un identifiant à l'intérieur ou à l'extérieur d'un véhicule automobile, connus de l'homme du métier, qui permettent de déterminer si l'identifiant est à l'intérieur du véhicule automobile et dans l'affirmative d'activer une fonction tel que le démarrage du véhicule automobile. On s'assure ainsi que personne ne pourra démarrer le véhicule automobile alors que l'utilisateur du véhicule et son identifiant se trouve à l'extérieur dudit véhicule. Pour réaliser cette fonction, le véhicule automobile comporte une antenne primaire qui émet une pluralité de signaux sur une pluralité de canaux de communication et l'identifiant comporte une antenne secondaire qui reçoit ladite pluralité de signaux sur ladite pluralité de canaux de communication. Les signaux sont des signaux Bluetooth Low Energy^{™} qui permettent de déterminer si l'identifiant se situe bien dans l'habitacle du véhicule automobile, ce grâce à des mesures de puissance des signaux reçus.

Les documents WO 2017/191480 A1 (DURA AUTOMOTIVE SYSTEMS [FR]) 9 novembre 2017 (2017-11-09) et US 2014/188309 A1 (CARATTO DANILO [IT] ET AL) 3 juillet 2014 (2014-07-03) font partie de l'état de l'art pertinent.

Un inconvénient de cet état de la technique est qu'il existe de fortes dispersions de mesures de puissance des signaux reçus en fonction du canal de communication. Aussi, si l'identifiant se trouve à deux distances différentes dans le véhicule automobile, une mesure de puissance des signaux reçus à une première distance sur un premier canal peut être confondue avec une mesure de puissance des signaux reçus à une deuxième distance sur un deuxième canal différent du premier canal. Par conséquent, on n'est plus en mesure de déterminer où se trouve précisément l'identifiant et de déterminer s'il est à l'intérieur ou à l'extérieur du véhicule automobile.

Dans ce contexte, la présente invention vise à résoudre l'inconvénient précédemment mentionné.

### DESCRIPTION GENERALE DE L'INVENTION

A cette fin l'invention propose un procédé de détection d'un identifiant à l'intérieur ou à l'extérieur d'un véhicule automobile, selon la revendication indépendante 1.

Selon des modes de réalisation non limitatifs, le procédé de détection peut comporter en outre une ou plusieurs caractéristiques supplémentaires parmi les suivantes.

Selon un mode de réalisation non limitatif, ladite combinaison de ladite pluralité de mesures de puissance est calculée en fonction d'une moyenne desdites mesures de puissance.

Selon un mode de réalisation non limitatif, ledit procédé de détection comprend en outre le lissage de ladite pluralité de mesures de puissance pour chaque canal de communication.

Selon un mode de réalisation non limitatif, ledit procédé de détection comprend en outre une phase de calibrage comprenant :
- la définition pour chaque canal de communication de ladite puissance seuil primaire lorsque ledit identifiant est disposé à une position de référence dans l'habitacle dudit véhicule automobile ;
- la définition pour chaque canal de communication de ladite puissance seuil secondaire lorsque ledit identifiant est disposé à une position de référence dans l'habitacle dudit véhicule automobile.

Selon un mode de réalisation non limitatif, ladite puissance seuil secondaire est égale à l'écart-type multiplié par un facteur multiplicatif de la valeur moyenne d'une pluralité de mesures de puissances d'une pluralité de signaux reçus lors d'une phase de calibrage.

Selon un mode de réalisation non limitatif, lequel ladite puissance seuil primaire est égale à la puissance seuil secondaire plus un seuil d'hystérésis.

Selon un mode de réalisation non limitatif, ledit identifiant communique avec ledit véhicule automobile selon tout protocole de communication en bande de fréquence industrielle scientifique et médicale.

Selon un mode de réalisation non limitatif, l'identifiant est un téléphone mobile.

Selon un mode de réalisation non limitatif, lequel ledit procédé de détection comprend en outre :
- l'autorisation du démarrage dudit véhicule automobile si pour au moins un canal de communication la combinaison de mesures de puissance est supérieure ou égale à ladite puissance seuil secondaire ;
- l'interdiction du démarrage dudit véhicule automobile si pour au moins un canal de communication la combinaison de mesures de puissance est inférieure ou égale à ladite puissance seuil primaire.

Il est également proposé un dispositif de détection d'un identifiant à l'intérieur ou à l'extérieur d'un véhicule automobile, selon la revendication indépendante 10.

Selon des modes de réalisation non limitatifs, le dispositif de détection peut comporter en outre une ou plusieurs caractéristiques supplémentaires parmi les suivantes.

Selon un mode de réalisation non limitatif, l'une des deux unités de traitement secondaire ou primaire est en outre configurée pour lisser ladite pluralité de mesures de puissance pour chaque canal de communication.

Selon un mode de réalisation non limitatif, l'une des deux unités de traitement secondaire ou primaire est en outre configurée pour, lors de ladite phase de calibrage :
- définir pour chaque canal de communication ladite puissance seuil primaire lorsque ledit identifiant est disposé à une position de référence dans l'habitacle dudit véhicule automobile ;
- définir pour chaque canal de communication ladite puissance seuil secondaire lorsque ledit identifiant est disposé à une position de référence dans l'habitacle dudit véhicule automobile.

Selon un mode de réalisation non limitatif, l'une des deux unités de traitement secondaire ou primaire est en outre configurée pour :
- autoriser le démarrage dudit véhicule automobile si pour au moins un canal de communication la combinaison de mesures de puissance est supérieure ou égale à ladite puissance seuil secondaire ;
- interdire le démarrage dudit véhicule automobile si pour au moins un canal de communication la combinaison de mesure de puissance est inférieure ou égale à ladite puissance seuil primaire.

### BREVE DESCRIPTION DES FIGURES

L'invention et ses différentes applications seront mieux comprises à la lecture de la description qui suit et à l'examen des figures qui l'accompagnent.
- la figure 1 représente un organigramme d'un procédé de détection d'un identifiant à l'intérieur ou à l'extérieur d'un véhicule automobile, selon un mode de réalisation non limitatif de l'invention ;
- la figure 2 illustre un organigramme d'un calibrage d'un canal de communication entre une antenne secondaire de l'identifiant et une antenne primaire du véhicule automobile, ledit calibrage étant effectué par le procédé de détection de la figure 1, selon un mode de réalisation non limitatif ;
- la figure 3a représente un schéma d'un dispositif de détection d'un identifiant à l'intérieur ou à l'extérieur d'un véhicule automobile permettant de mettre en oeuvre ledit procédé de détection de la figure 1, selon un premier mode de réalisation non limitatif ;
- la figure 3b représente un schéma d'un dispositif de détection d'un identifiant à l'intérieur ou à l'extérieur d'un véhicule automobile permettant de mettre en oeuvre ledit procédé de détection de la figure 1, selon un deuxième mode de réalisation non limitatif ;
- la figure 4 représente un véhicule automobile comprenant une antenne primaire et une unité de traitement primaire, et un identifiant comprenant une antenne secondaire et une unité de traitement secondaire, lesdites antennes primaire et secondaire et lesdites unités de traitement primaire et secondaire faisant partie du dispositif de détection des figures 3a et 3b, selon un mode de réalisation non limitatif ;
- la figure 5a représente une courbe théorique de distribution de mesures de puissance d'un signal reçu applicable à l'un ou l'autre des identifiant ou véhicule automobile des figures 3a et 3b, selon un mode de réalisation non limitatif ;
- la figure 5b représente une courbe réelle correspondant à la courbe théorique de la figure 5a en superposition sur ladite courbe théorique, selon un mode de réalisation non limitatif ;
- la figure 6a représente des mesures de puissance d'une pluralité de signaux reçus sur trois canaux de communication par l'un ou l'autre des identifiant ou véhicule automobile des figures 3a et 3b, selon un mode de réalisation non limitatif ;
- la figure 6b représente la figure 6a avec des variations de mesures lorsque l'identifiant des figures 3a et 3b se trouve à l'intérieur ou à l'extérieur du véhicule automobile, selon un mode de réalisation non limitatif ;
- la figure 7 représente une gaussienne de mesures de puissance d'une pluralité de signaux reçus cycliquement sur un seul canal de communication par l'un ou l'autre des identifiant ou véhicule automobile des figures 3a et 3b, selon un mode de réalisation non limitatif ;
- la figure 8a illustre un schéma d'un passage de l'identifiant des figures 3a et 3b, de l'intérieur vers l'extérieur du véhicule automobile en fonction d'une courbe de calibration ;
- la figure 8b illustre un schéma d'un passage de l'identifiant des figures 3a et 3b, de l'extérieur vers l'intérieur du véhicule automobile en fonction d'une courbe de calibration ;
- la figure 9 illustre un schéma d'un passage de l'identifiant des figures 3a et 3b de l'intérieur vers l'extérieur du véhicule automobile et de l'extérieur vers l'intérieur du véhicule automobile, basé sur les schémas des figures 8a et 8b appliqués à une bulle de démarrage.

### DESCRIPTION DE MODES DE REALISATION DE L'INVENTION

Les éléments identiques, par structure ou par fonction, apparaissant sur différentes figures conservent, sauf précision contraire, les mêmes références.

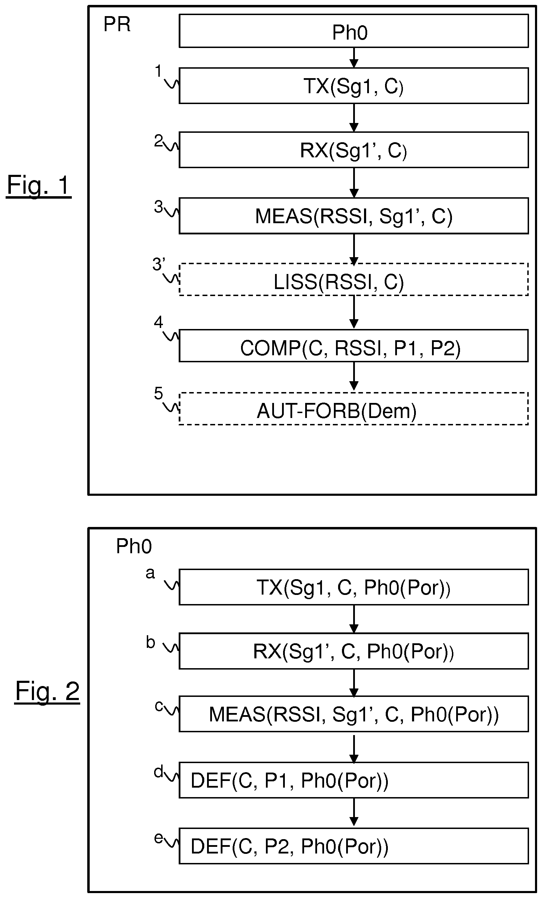

L'invention concerne un procédé de détection PR d'un identifiant Id à l'intérieur ou à l'extérieur d'un véhicule automobile V illustré sur les figures 1 et 2.

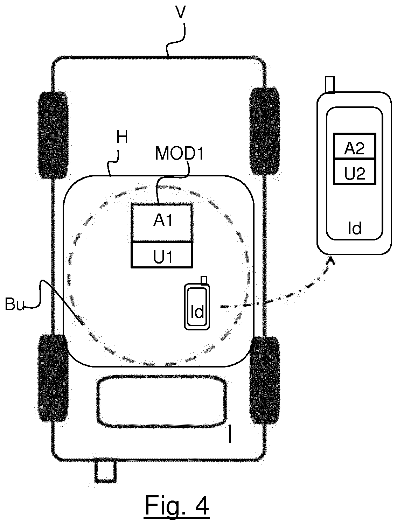

Le véhicule automobile V et l'identifiant Id sont illustrés sur la figure 4.

Le véhicule automobile V comprend un habitacle H.

Le véhicule automobile comprend :
- une antenne primaire A1 intégrée dans l'habitacle H du véhicule automobile V ; et
- une unité de traitement primaire U1 ;

L'identifiant Id comprend :
- une antenne secondaire A2 ; et
- une unité de traitement secondaire U2.

On notera qu'une unité de traitement U1, U2 comprend un ou plusieurs processeurs.

Dans des exemples non limitatifs, l'identifiant Id est une clef électronique, un badge, un téléphone mobile tel qu'un téléphone intelligent appelé « smartphone ».

Dans un mode de réalisation non limitatif, l'identifiant Id du véhicule automobile permet d'accéder au véhicule automobile et également de démarrer le véhicule automobile V. Les procédures d'accès à un véhicule automobile et de démarrage d'un véhicule automobile via un identifiant Id étant bien connue de l'homme du métier, elles ne sont pas décrites ici.

Dans un mode de réalisation non limitatif, l'identifiant Id est configuré pour communiquer avec ledit véhicule automobile V selon un protocole de communication en bande de fréquence industrielle scientifique et médicale ISM. Dans des variantes de réalisation non limitatives, l'identifiant Id communique avec le véhicule automobile V selon le protocole de communication Bluetooth^{™}, Bluetooth Low Energy^{™} référencé BLE, WIFI, etc. que ce soit pour l'accès au véhicule, c'est-à-dire pour ouvrir un ouvrant du véhicule automobile V (portière ou coffre), ou pour le démarrage du véhicule automobile V. Ainsi, dans des variantes de réalisation non limitatives, les deux antennes primaire et secondaire A1, A2 sont adaptées pour communiquer selon le protocole de communication Bluetooth^{™}, Bluetooth Low Energy^{™} référencé BLE, WIFI, etc.

Le procédé de détection PR permet de déterminer si l'identifiant Id est à l'intérieur ou à l'extérieur du véhicule automobile V, à savoir à l'intérieur ou à l'extérieur de l'habitacle H du véhicule automobile V, tel qu'illustré sur la figure 4.

Le procédé de détection PR est décrit selon un mode de réalisation non limitatif illustré sur la figure 1.

Selon deux modes de réalisation non limitatifs du procédé de détection PR, soit l'antenne primaire A1 émet une pluralité de signaux Sg1, soit l'antenne secondaire A2 émet une pluralité de signaux Sg1. En fonction de l'émission par l'une ou l'autre des deux antennes primaire A1 ou secondaire A2, les étapes suivantes sont effectuées par l'une ou l'autre des deux antennes primaire A1 ou secondaire A2, ou par l'une ou l'autre des unités de traitement primaire U1 ou secondaire U2.

Le mode de réalisation non limitatif décrit sur la figure 1 comprend en outre une étape non limitative de lissage de ladite pluralité de mesures de puissance RSSI pour chaque canal de communication C.

Le mode de réalisation non limitatif décrit sur la figure 1 comprend en outre les étapes non limitatives :
- d'autorisation du démarrage dudit véhicule automobile V si pour chaque canal de communication C la combinaison Cb de mesures de puissance RSSI est supérieure ou égale à ladite puissance seuil secondaire P2 ; et
- d'interdiction du démarrage dudit véhicule automobile V si pour chaque canal de communication C la combinaison Cb de mesures de puissance RSSI est inférieure ou égale à ladite puissance seuil primaire P1.

Les étapes du procédé de détection PR sont décrites ci-après.

**Dans une étape 1)** illustrée TX(Sg1, C), l'une des deux antennes primaire A1 ou secondaire A2 émet cycliquement une pluralité de signaux Sg1 sur une pluralité de canaux de communication C.

Dans la suite de la description, un canal de communication C sera également appelé canal C.

On notera que le protocole de communication BLE permet l'échange bidirectionnel de données à très courte distance et utilise des ondes radio sur une bande de fréquence de 2,4 GHz. Ce protocole de communication BLE est pris comme exemple non limitatif dans la suite de la description. Dans un mode de réalisation non limitatif, l'émission de la pluralité de signaux Sg1 s'effectue sur trois canaux nommés C37, C38, C39. Ces canaux sont également appelés canaux de diffusion dans le cadre du protocole de communication BLE. On dit dans ce cas que l'antenne primaire A1 ou secondaire A2 qui émet est dans un mode de diffusion ADV appelé en anglais « Advertising ».

Le canal C37 utilise la fréquence 2402MHz, le canal C38 la fréquence 2426 MHz et le canal C39 la fréquence 2480 MHz.

Dans un mode de réalisation non limitatif, la pluralité de signaux émis Sg1 est émise toutes les 100ms (millisecondes) sur un des trois canaux C37, C38 et C39, par exemple le canal C37 et ce durant quelques centaines de millisecondes (700ms dans un exemple non limitatif) à quelques secondes (entre 2 et 5 secondes dans un exemple non limitatif). Puis un changement de canal s'effectue. La pluralité de signaux émis Sg1 est émise toutes les 100 millisecondes sur le canal suivant, C38 par exemple, durant quelques centaines de millisecondes à quelques secondes. Enfin, un changement de canal s'effectue de nouveau, La pluralité de signaux émis Sg1 est émise toutes les 100 millisecondes sur le canal suivant, C39 par exemple, durant quelques centaines de millisecondes à quelques secondes.

**Dans une étape 2)** illustrée RX(Sg1', C), l'autre des deux antennes primaire A1 ou secondaire A2 reçoit cycliquement ladite pluralité de signaux émis Sg1. Les signaux reçus correspondants aux signaux émis Sg1 sont référencés Sg1' dans les figures.

Ceci est possible lorsque l'identifiant Id comprenant ladite antenne secondaire A2 est disposé à une distance de la première antenne A1 suffisamment proche, par exemple en deçà d'une distance comprise entre 30 et 50 mètres.

Dans un mode de réalisation non limitatif, l'autre des deux antennes primaire A1 ou secondaire A2 est configurée pour recevoir ladite pluralité de signaux émis Sg1 sur trois canaux de communication C37, C38 et C39.

Ainsi si c'est l'antenne primaire A1 qui est configurée pour émettre, ce sera l'antenne secondaire A2 qui sera configurée pour recevoir, et vice et versa.

**Dans une étape 3)** illustrée MEAS(RSSI, Sg1', C), l'une des deux unités de traitement secondaire U2 ou primaire U1 réalise pour chaque canal de communication C une pluralité de mesures de puissance RSSI de ladite pluralité de signaux reçus Sg1' correspondant à ladite pluralité de signaux émis Sg1.

Ainsi, l'unité de traitement qui va réaliser les mesures de puissance RSSI est celle correspondante à l'antenne qui reçoit la pluralité de signaux émis Sg1.

Ainsi, si l'antenne primaire A1 reçoit la pluralité de signaux émis Sg1, c'est l'unité de traitement primaire U1 qui effectue cette étape, sinon si c'est l'antenne secondaire A2 qui reçoit la pluralité de signaux émis Sg1, c'est l'unité de traitement secondaire U2 qui effectue cette étape.

Dans la suite de la description, une mesure de puissance RSSI est également appelée mesure RSSI (« Received Signal Strength Indicator » en anglais).

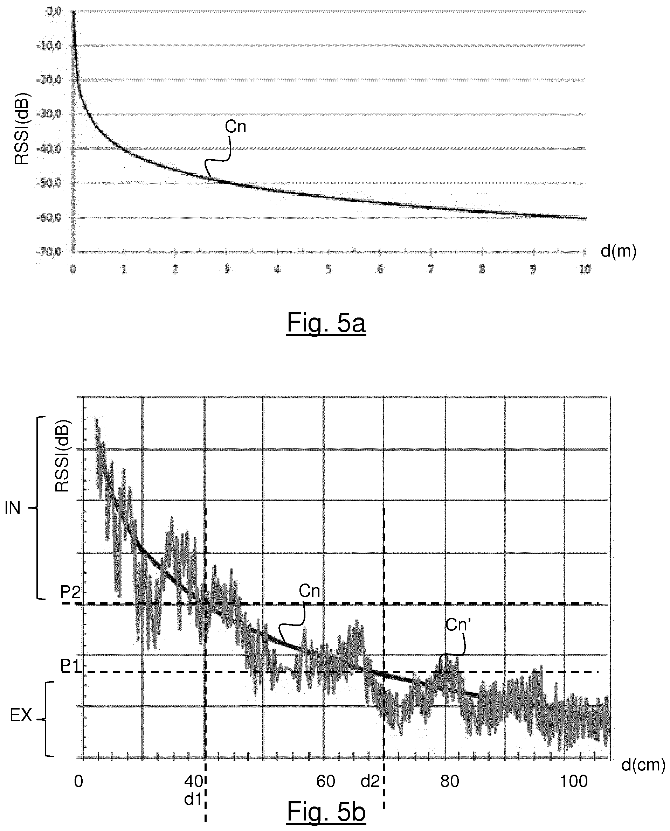

Comme on peut le voir sur la figure 5a, une courbe théorique Cn de distribution de mesures de puissance RSSI d'un unique signal reçu Sg1' émis à une distance croissante (appelée également courbe de décroissance de puissance ou courbe de régression) est illustrée. Cette courbe théorique de distribution Cn illustre plusieurs mesures consécutives d'un unique signal émis à une distance croissante (en mètres ici). On peut voir que plus la distance d entre l'identifiant Id et l'antenne primaire A1 du véhicule automobile V est grande, plus la mesure de la puissance RSSI d'un signal reçu Sg1' correspondant au signal émis Sg1 diminue et ce quelque soit la fréquence du signal émis Sg1.

C'est une courbe logarithmique qui évolue selon la formule 20log(4πd/λ), avec d, la distance et λ une longueur d'onde. En abscisse, on trouve la distance (en mètres), en ordonnée, on trouve la mesure de la puissance RSSI (en décibels dB).

En raison du phénomène de réflexion, autrement appelé phénomène multi-trajets (appelé « multipath» en anglais) qui engendre des signaux parasites dus à des réflexions du signal émis sur les parties métalliques (carrosserie, volant, levier de vitesse, plancher etc.) du véhicule automobile V, la mesure de puissance RSSI du signal reçu Sg1' est parasité. On obtient ainsi une courbe réelle Cn' de distribution de mesures de puissance RSSI tel qu'illustré sur la figure 5b. Sur la figure 5b, la courbe réelle Cn' est superposée à la courbe théorique Cn.

Tel qu'illustré sur la figure 5b :
- en deçà d'une certaine distance d1 correspondant à une puissance seuil secondaire P2, l'identifiant Id se trouve à l'intérieur IN du véhicule automobile V ;
- au delà d'une certaine distance d2 correspondant à une puissance seuil primaire P1, l'identifiant Id se trouve à l'extérieur EX du véhicule automobile V.

Dans un exemple non limitatif, la distance d1 est égale à 40cm. Dans un exemple non limitatif, la distance d2 est égale à 70cm.

Comme décrit précédemment, ladite pluralité de signaux émis Sg1 est émise sur trois canaux de communication C37, C38 et C39.

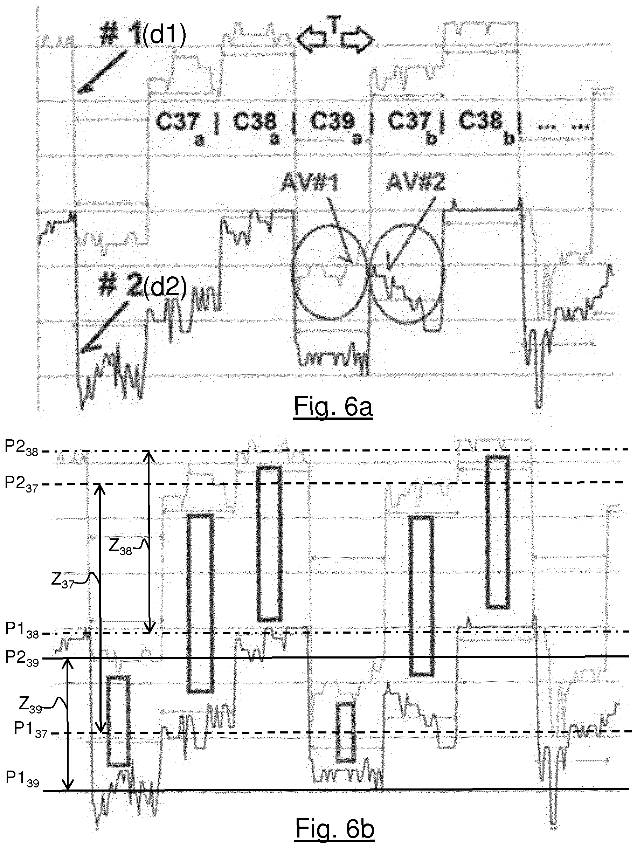

La figure 6a illustre un relevé de mesures RSSI d'une pluralité de signaux reçus Sg1' par l'autre des deux antennes primaire A1 ou secondaire A2 sur les trois canaux C37, C38 et C39, et ce pour deux distances d1, d2 entre ledit identifiant Id et ladite antenne primaire A1 dudit véhicule automobile V.

La distance d1 est une distance où l'identifiant ID se trouve à l'intérieur du véhicule automobile V, et la distance d2 est une distance où l'identifiant ID se trouve à l'extérieur du véhicule automobile V.

On obtient deux relevés de positions #1 et #2 illustrés sur la figure 6a de l'identifiant Id correspondants aux deux distances d1 et d2.

Comme on peut le voir, la mesure est cyclique sur les trois canaux C37, C38 et C39.

L'une des deux unités de traitement secondaire U2 ou primaire U1 réalise plusieurs mesures RSSI de plusieurs signaux reçus Sg1' sans changer de canal pendant un temps T (correspondant à la durée des paliers sur la figure 6a). Dans un mode de réalisation non limitatif, le temps T est compris entre une à quatre secondes. Dans une variante de réalisation non limitative, le temps T est égal à quatre secondes.

Sur la figure 6a, on peut observer que :
- à chaque changement de canal, il y a un palier différent. Ces paliers sont des variations brusques de mesures de puissance RSSI ;
- à chaque retour sur un même canal (par exemple C37a puis C37b), on retrouve le même niveau de palier ;
- la moyenne AV#1 des mesures RSSI du canal C39a est du même ordre que la moyenne AV#2 des mesures RSSI du canal C37b. Dans ce cas, on ne peut distinguer les deux distances d1 ou d2, sur par exemple deux fois T, à savoir environ de deux à huit secondes, si un déplacement très rapide de l'identifiant Id est effectué de #1 vers #2, à savoir de l'intérieur vers l'extérieur du véhicule automobile V. Il y a ainsi un problème de chevauchement entre des mesures RSSI de différents canaux ;
- les mesures RSSI sur le canal C37b lorsque l'identifiant Id se trouve à l'extérieur du véhicule automobile V sont équivalentes à celles du canal C39a lorsque l'identifiant Id se trouve à l'intérieur du véhicule automobile V. Il n'est pas possible de savoir si l'identifiant Id se trouve à l'intérieur ou à l'extérieur du véhicule automobile V ;
- Les mesures RSSI sur le canal C38a lorsque l'identifiant Id se trouve à l'extérieur du véhicule automobile V sont plus grandes que celles du canal C39a lorsque l'identifiant Id se trouve à l'intérieur du véhicule automobile V. Il n'est pas possible de savoir si l'identifiant Id se trouve à l'intérieur ou à l'extérieur du véhicule automobile V ;
- Si on observe la différence entre les deux relevés #1 et #2 à canal fixe, à savoir sur un canal C uniquement, la différence de mesures RSSI est proportionnelle à la différence de distance entre d1 et d2. Si les mesures RSSI sont comparées uniquement à iso canal d'une position #1 dudit identifiant Id à une autre position #2, on distingue alors nettement une valeur relative à la différence de distance d1, d2. Ainsi, on distingue nettement la mesure RSSI correspondant à la distance d1 de la mesure RSSI correspondant à la distance d2.

Comme on va le voir ci-après l'autre des deux unités de traitement secondaire U2 ou primaire U1 va ainsi distinguer les mesures RSSI sur les canaux C37, C38, et C39 et effectuer un traitement avec les différentes mesures RSSI, et ce pour chacun des canaux C37, C38, et C39 de sorte à pouvoir détecter précisément si l'identifiant Id se trouve à l'intérieur ou à l'extérieur du véhicule automobile V. L'autre des deux unités de traitement secondaire U2 ou primaire U1 va ainsi gérer les différents canaux C37, C38, et C39 de manière distincte.

**Dans une étape 3')** illustrée LISS(RSSI, C), l'une des deux unités de traitement secondaire U2 ou primaire U1 lisse ladite pluralité de mesures de puissance RSSI pour chaque canal de communication C.

Cela permet d'éviter les variations rapides de mesure.

On notera que c'est la même unité de traitement qui réalise les mesures RSSI à l'étape 3 qui effectue le lissage à l'étape 3'.

Dans un mode de réalisation non limitatif, le lissage est effectué au moyen d'une table de taille N qui réalise une moyenne glissante sur N échantillons. Ainsi pour chaque nouvelle mesure, la valeur la plus ancienne de la table est supprimée et la nouvelle est intégrée pour recalculer la nouvelle moyenne (glissante). Dans la table, les valeurs ont une distribution de type gaussien. Grâce au lissage, on supprime les mesures RSSI divergentes, à savoir celles qui sortent de la gaussienne. On supprime ainsi les pics de mesures qui proviennent du phénomène multi-trajets.

Dans un exemple non limitatif, N=10 pour le cas d'émission toutes les 100ms. On obtient ainsi une table renouvelée toute les une seconde.

**Dans une étape 4)** illustrée COMP(C, RSSI, P1, P2), pour chaque canal de communication C, l'une des deux unités de traitement secondaire U2 ou primaire U1 compare une combinaison Cb de ladite pluralité de mesures de puissance RSSI réalisées sur ledit canal de communication C :
- avec une puissance seuil primaire P1 de passage de l'intérieur vers l'extérieur du véhicule automobile V ; et
- avec une puissance seuil secondaire P2 de passage de l'extérieur vers l'intérieur dudit véhicule automobile V.

On notera que c'est la même unité de traitement qui a réalisé les étapes 3 et 3' qui effectue l'étape 4.

Le fait de faire une comparaison d'une combinaison Cb de mesures RSSI canal C par canal C et non plus sur l'ensemble des canaux C permet de supprimer les problèmes de chevauchement de mesures RSSI entre canaux C vus précédemment sur la figure 6a. Il est ainsi possible de savoir si l'identifiant Id est à l'intérieur ou à l'extérieur du véhicule automobile V de façon précise et d'éviter ainsi de fausses détections.

Comme on peut le voir sur la figure 6b, les rectangles représentent les variations de mesures RSSI sur les trois canaux C37, C38 et C39 lorsque l'identifiant Id est à la position #1 et #2 comme vu précédemment.

Ils représentent ainsi une zone de différentiation Z lorsque l'identifiant Id est à la position #1, à savoir à l'intérieur du véhicule automobile V et lorsque l'identifiant Id est à la position #2, à savoir à l'extérieur du véhicule automobile V. Les zones de différentiations Z sont différentes d'un canal C à l'autre. Ainsi, dans l'exemple non limitatif illustré, on a trois zones de différentiations Z₃₇, Z₃₈ et Z₃₉ correspondant aux trois canaux C37, C38 et C39.

En faisant une comparaison différenciée pour chacun des trois canaux C37, C38, C39, on évite qu'une mesure RSSI sur un canal C à une position #1 ou à une position #2 ne chevauche une autre mesure RSSI sur un autre canal C, ce qui est le cas si on ne différencie pas la canal C37 du canal C39 comme vu précédemment.

Cela permet ainsi de savoir si l'identifiant Id se trouve à l'intérieur ou à l'extérieur du véhicule automobile V contrairement à une solution où on effectue une comparaison avec une combinaison de mesures RSSI prises sur l'ensemble des trois canaux C37, C38, C39 sans différenciation des trois canaux C37, C38, C39.

Ainsi, en isolant les canaux C37, C38, C39 les uns des autres, on obtient de meilleures performances pour la détection de l'identifiant Id à l'intérieur ou à l'extérieur du véhicule automobile V.

Dans un mode de réalisation non limitatif, ladite combinaison Cb de ladite pluralité de mesures de puissance RSSI est calculée en fonction d'une moyenne AVG desdites mesures de puissance RSSI.

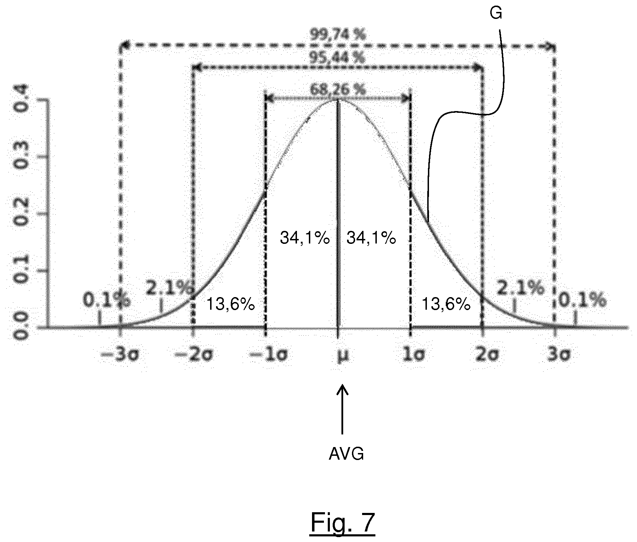

La figure 7 illustre schématiquement, l'ensemble des mesures RSSI de la pluralité de signaux reçus Sg1' par l'autre des deux antennes primaire A1 ou secondaire A2 sur un unique canal C.

L'ensemble de mesures RSSI forme une gaussienne G tel qu'illustré sur la figure 7.

Lorsqu'il y a un lissage, la combinaison Cb est la moyenne glissante AVG de ladite pluralité de mesures de puissances RSSI de ladite pluralité de signaux reçus Sg1'.

Dans un mode de réalisation non limitatif, ladite puissance seuil primaire P1 est différente d'un canal de communication C à l'autre, et ladite puissance seuil secondaire P2 est différente d'un canal de communication C à l'autre. On notera que cela correspond à une majorité des identifiants Id tels que des téléphones mobiles (environ 90% des téléphones mobiles). Cela permet de prendre en compte les écarts de mesure RSSI entre les différents canaux C. Ainsi, tel qu'illustré sur la figure 6b, le canal C37 comprend une puissance seuil primaire P1₃₇ associée différente de celles P1_{38 et} P1₃₉ des canaux C38 et C39. De plus, il comprend une puissance seuil secondaire P2₃₇ associée différente de celles P2_{38 et} P2₃₉ des canaux C38 et C39.

Et le canal C38 comprend des puissances seuils primaire P1₃₈ et secondaire P2₃₈ différentes respectivement des puissances seuils primaire P1₃₉ et secondaire P2₃₉ du canal C39.

On notera que le procédé de détection PR fonctionne également même si ladite puissance seuil primaire P1 est la même d'un canal de communication C à l'autre, et ladite puissance seuil secondaire P2 est la même d'un canal de communication C à l'autre. On notera que cela correspond à une minorité des identifiants Id tels que des téléphones mobiles (environ 10% des téléphones mobiles).

**Dans une étape 5)** illustrée AUT_FORB(Dem), l'une des deux unités de traitement secondaire U2 ou primaire U1 :
- autorise le démarrage dudit véhicule automobile V si pour chaque canal de communication C la combinaison Cb de mesures de puissance RSSI est supérieure ou égale à ladite puissance seuil secondaire P2 ;
- interdit le démarrage dudit véhicule automobile V si pour chaque canal de communication C la combinaison Cb de mesures de puissance RSSI est inférieure ou égale à ladite puissance seuil primaire P1.

Autrement dit, on permet ou on interdit l'activation d'une fonction de démarrage Dem pour démarrer le véhicule automobile V.

On notera que c'est la même unité de traitement qui a réalisé les étapes 3 à 4 qui effectue l'étape 5.

On notera que l'autre des deux unités de traitement secondaire U2 ou primaire U1 est configurée pour :
- changer de canal C ;
- indiquer dans la pluralité de signaux Sg1 le numéro de canal pour permettre le tri entre les canaux.
   - Phase de calibrage Ph0

On notera que les deuxièmes antennes A2 des identifiants Id, notamment lorsque ceux-ci sont des téléphones mobiles, comportent des performances variables selon les différents types de téléphones mobiles utilisés (à savoir lorsqu'ils sont fabriqués par différents fabricants) mais également à l'intérieur même d'une même gamme de téléphones fabriqués par un même fabricant. Par performances différentes, on entend que pour un même signal Sg1 émis par la première antenne A1 (de même puissance donc), les différentes deuxièmes antennes A2 ne vont pas recevoir la même puissance de signal, ou pour un même signal Sg1 émis par différentes deuxièmes antennes A2 (de même puissance donc), la première antenne A1 ne va pas recevoir la même puissance de signal. On aura ainsi une courbe réelle Cn' de distribution de mesures de puissance RSSI différente d'un identifiant Id à l'autre.

Il faut donc calibrer la deuxième antenne A2 d'un identifiant Id avec la première antenne A1 ou vice et versa, en particulier lors de la première utilisation de l'identifiant Id avec ledit véhicule automobile V.

Ainsi, dans un mode de réalisation non limitatif, le procédé de détection PR comprend en outre une phase de calibrage Ph0 illustrée sur la figure 1 et en détail sur la figure 2.

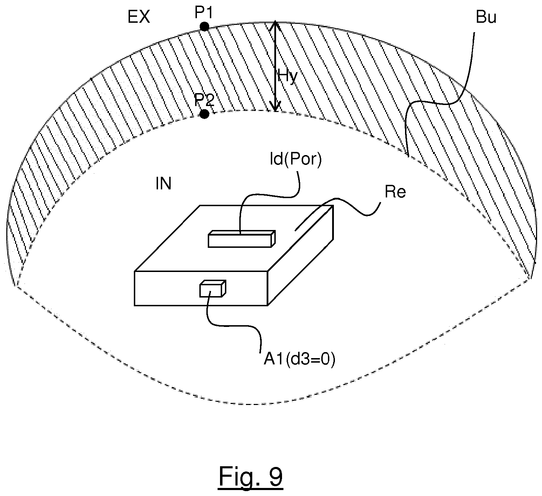

Pour la phase de calibrage Ph0, l'identifiant Id est adapté pour être positionné à une position de référence Por. Ainsi, pour la phase de calibrage Ph0, ledit identifiant Id est disposé à une position de référence Por dans l'habitacle H dudit véhicule automobile V tel qu'illustré sur la figure 9.

La position de référence Por comprend par exemple un réceptacle Re adapté pour recevoir l'identifiant Id.

On notera que l'antenne primaire A1 est disposée à une distance prédéfinie d3 de la position de référence Por du véhicule automobile V. Dans un exemple non limitatif illustré sur la figure 9, l'antenne primaire A1 est disposée au niveau de la position de référence Por, à savoir la distance prédéfinie d3 est sensiblement égale à zéro.

Dans un autre exemple non limitatif, la distance prédéfinie d3 est égale à dix centimètres.

Tel qu'illustré sur la figure 2, la phase de calibrage Ph0 comprend :
- a) l'émission cyclique par l'une des deux antennes primaire A1 ou secondaire A2 d'une pluralité de signaux Sg1 sur ladite pluralité de canaux de communication C (étape illustrée TX(Sg1, C, PH0(Por))) ;
- b) la réception cyclique par l'autre des deux antennes primaire A1 ou secondaire A2 de ladite pluralité de signaux Sg1 sur ladite pluralité de canaux de communication C (étape illustrée RX(Sg1', C, PH0(Por))). Le calibrage est ainsi symétrique. Soit l'identifiant Id reçoit des signaux émis Sg1 par le véhicule automobile V, soit le véhicule automobile V reçoit des signaux émis Sg1 par l'identifiant Id ;
- c) la réalisation par l'une des deux unités de traitement secondaire U2 ou primaire U1 pour chaque canal de communication C d'une pluralité de mesures de puissance RSSI de ladite pluralité de signaux reçus Sg1' correspondant à ladite pluralité de signaux émis Sg1 (étape illustrée MEAS(RSSI, Sg1', C, PH0(Por))).

Ces mesures RSSI sont ainsi des mesures RSSI de référence déterminées lorsque l'identifiant Id est sur la position de référence Por.

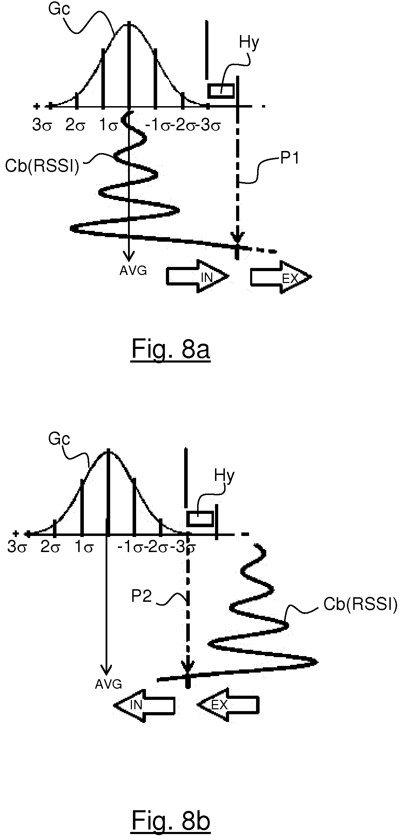

On obtient une gaussienne de mesures de puissance Gc de référence, autrement appelée courbe de calibration, telle qu'illustrée sur les figures 8a et 8b. C'est le même type de courbe que l'on peut observer sur la figure 7 décrite précédemment.

La puissance seuil primaire P1 et la puissance seuil secondaire P2 de chaque canal C est déterminée à partir de ces mesures RSSI de référence. Ainsi, la phase de calibrage Ph0 comprend en outre :
- d) la définition pour chaque canal de communication C d'une puissance seuil primaire P1 lorsque ledit identifiant Id est disposé à une position de référence Por dans l'habitacle H dudit véhicule automobile V (étape illustrée DEF(C, P1, Ph0(Por))) ;
- e) la définition pour chaque canal de communication C d'une puissance seuil secondaire P2 lorsque ledit identifiant Id est disposé à une position de référence Por dans l'habitacle H dudit véhicule automobile V (étape illustrée DEF(C, P2, Ph0(Por))).

Tel qu'illustré sur la figure 8b, dans un mode de réalisation non limitatif, ladite puissance seuil secondaire P2 est égale à l'écart-type σ multiplié par un facteur multiplicatif Fσ de la valeur moyenne AVG de ladite pluralité de mesures de puissances RSSI de ladite pluralité de signaux reçus Sg1' lors de ladite phase de calibrage Ph0.

Le facteur multiplicatif Fσ permet de couvrir presque la totalité des mesures RSSI. Dans un exemple non limitatif, le facteur multiplicatif Fσ est égal à 2 ou 3. Cela permet de couvrir plus de 95% des mesures RSSI.

Tel qu'illustré sur la figure 8a, dans un mode de réalisation non limitatif, ladite puissance seuil primaire P1 est égale à la puissance seuil secondaire P2 plus un seuil d'hystérésis Hy. Le seuil d'hystérésis Hy permet d'éviter les instabilités de décisions sur l'identifiant Id, à savoir s'il est à l'intérieur ou à l'extérieur du véhicule automobile V.

Dans un mode de réalisation non limitatif, le seuil d'hystérésis Hy est le même pour tous les canaux C37, C38 et C39. Dans un exemple non limitatif, il est égal à 3 dB.

Ainsi, en fonctionnement, à savoir lorsque ledit identifiant Id est utilisé pour le démarrage du véhicule automobile V dans l'exemple non limitatif, on peut voir sur les figures 8a et 8b et 9 que :
- a) si pour au moins un canal C, la combinaison Cb de mesures RSSI est supérieure ou égale à la puissance seuil secondaire P2, alors le démarrage est autorisé car cela veut dire que l'identifiant Id est détecté comme étant à l'intérieur du véhicule automobile V, sinon l'identifiant Id est considéré comme se trouvant dans son état antérieur (à l'intérieur IN ou à l'extérieur EX) .
- b) si pour au moins un canal C, la combinaison Cb de mesures RSSI est inférieure ou égale à la puissance seuil primaire P1, alors le démarrage est interdit car cela veut dire que l'identifiant Id est détecté comme étant à l'extérieur du véhicule automobile V, sinon l'identifiant Id est considéré comme restant dans son état antérieur (à l'intérieur IN ou à l'extérieur EX) .

Ainsi, pour que l'identifiant Id soit considéré comme étant à l'intérieur IN du véhicule automobile V, à savoir dans l'habitacle H, il faut que la condition a) soit vérifiée sur au moins un canal C37, C38, C39. Ainsi, si pour un seul canal (le canal en cours d'analyse), la condition a) est vérifiée mais pas pour les deux autres canaux, alors l'identifiant Id est considéré comme étant à l'intérieur IN. Il en est de même si pour deux canaux la condition a) est vérifiée, mais pas pour le troisième.

Par ailleurs, pour que l'identifiant Id soit considéré comme étant à l'extérieur EX du véhicule automobile V, à savoir dans l'habitacle H, il faut que la condition b) soit vérifiée sur au moins un canal C37, C38, C39. Ainsi, si pour un seul canal (le canal en cours d'analyse), la condition b) est vérifiée mais pas pour les deux autres canaux, alors l'identifiant Id est considéré comme étant à l'extérieur EX. Il en est de même si pour deux canaux la condition b) est vérifiée, mais pas pour le troisième.

On notera que les conditions a) et b) sont vérifiées de façon séquentielle, canal après canal.

La figure 9 illustre une bulle de démarrage Bu délimitée par la puissance secondaire P2. Plus l'identifiant Id se rapproche de l'antenne primaire A1 alors plus la combinaison Cb de mesures RSSI va augmenter et va devenir supérieure à la puissance seuil secondaire P2 de sorte que l'identifiant Id va se retrouver dans la bulle de démarrage Bu. Plus l'identifiant Id s'éloigne de l'antenne primaire A1, alors plus la combinaison Cb de mesures RSSI va diminuer et va devenir inférieure à la puissance seuil primaire P1 de sorte que l'identifiant Id va se retrouver en dehors de la bulle de démarrage Bu. La zone hachurée délimitée par l'hystérésis Hy est une zone dans laquelle il n'y a ni autorisation ni interdiction du démarrage. Si l'identifiant Id était considéré comme étant à l'intérieur du véhicule automobile V, alors il le reste lorsqu'il est dans la zone hachurée. Si l'identifiant Id était considéré comme étant à l'extérieur du véhicule automobile V, alors il le reste lorsqu'il est dans la zone hachurée.

Afin de déclencher le calibrage, lorsque l'utilisateur appuie sur le bouton démarrage du véhicule V, lors de la première utilisation de l'identifiant Id avec le véhicule automobile V (dans l'exemple non limitatif pris), un calculateur associé au bouton de démarrage va envoyer à l'une ou l'autre des deux antennes primaire A1 ou secondaire A2 une commande pour émettre une pluralité de signaux Sg1.

De plus, dans un mode de réalisation non limitatif, lors de la première utilisation de l'identifiant Id avec le véhicule automobile V (dans l'exemple non limitatif pris), afin que l'identifiant Id soit positionné à la position de référence Por, l'identifiant Id est en outre configuré pour afficher sur un écran un message (de type fenêtre « Pop-Up » dans un exemple non limitatif) invitant l'utilisateur dudit identifiant Id à le positionner au niveau de la position de référence Por et à déclencher le calibrage (en appuyant sur un bouton « Ok » dans un exemple non limitatif).

Dans un autre mode de réalisation non limitatif, l'un des identifiant Id ou véhicule automobile V est configuré pour calibrer l'autre des identifiant Id ou véhicule automobile V sur demande, même après la première utilisation de l'identifiant Id. Par exemple, l'identifiant Id peut comporter un menu permettant de lancer la fonction de calibrage associée au démarrage du véhicule automobile V ou vice et versa. De la même manière que décrit précédemment, un calculateur associé au bouton de démarrage va envoyer à l'une des deux antennes primaire A1 et secondaire A2 une commande pour émettre une pluralité de signaux Sg1, et un message peut inviter l'utilisateur dudit identifiant Id à positionner ledit identifiant Id au niveau de la position de référence Por.

Le procédé de détection PR est mis en oeuvre par un dispositif de détection DISP d'un identifiant Id à l'intérieur ou à l'extérieur d'un véhicule automobile V.

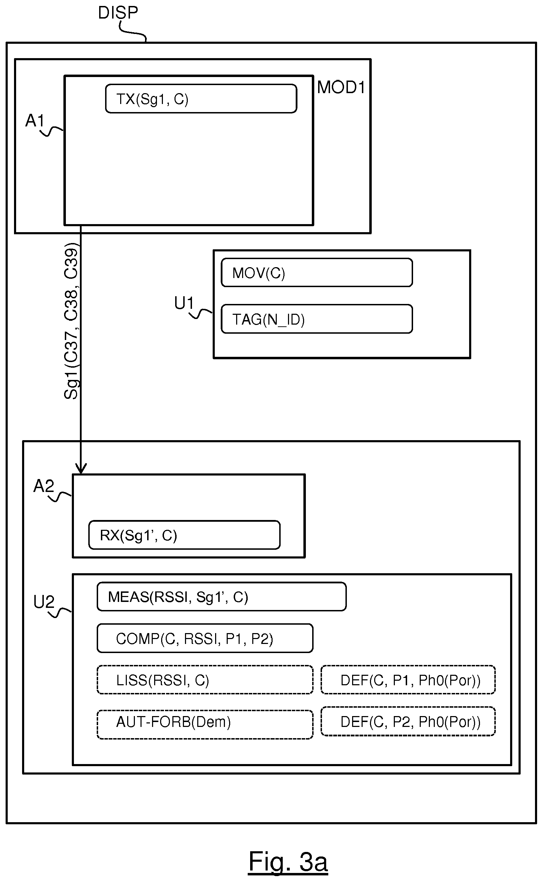

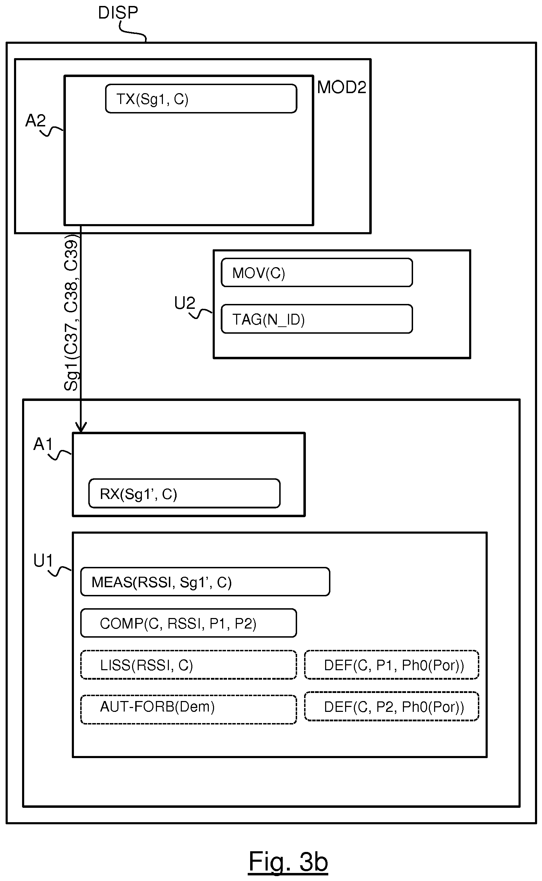

Le dispositif de détection DISP comprend tel qu'illustré sur les figures 3a et 3b :
- ladite antenne primaire A1 ;
- ladite unité de traitement primaire U1 ;
- ladite antenne secondaire A2 ; et
- ladite unité de traitement secondaire U2.

Dans un mode de réalisation non limitatif, l'antenne primaire A1 fait partie d'un module radiofréquence MOD1, autrement appelé module RF. Il en est de même pour l'antenne secondaire A2 dont le module RF est référencé MOD2.

Les différents éléments du dispositif de détection DISP sont décrits en détail ci-après selon un premier mode de réalisation non limitatif illustré sur la figure 3a, et selon un deuxième mode de réalisation non limitatif illustré sur la figure 3b.

### • Premier mode de réalisation

Selon un premier mode de réalisation non limitatif, l'antenne primaire A1 est configurée pour :
- émettre une pluralité de signaux Sg1 vers l'antenne secondaire A2 sur une pluralité de canaux de communication C (fonction illustrée sur la figure 3a TX(Sg1, C)).

Selon ce premier mode de réalisation non limitatif, l'antenne secondaire A2 est configurée pour :
- recevoir cycliquement la pluralité de signaux Sg1 émis par ladite antenne primaire A1 sur ladite pluralité de canaux de communication C (fonction illustrée sur la figure 1 RX(Sg1, C).

Selon ce premier mode de réalisation non limitatif, l'unité de traitement primaire U1 est configurée pour :
- changer de canal (fonction illustrée sur la figure 3a MOV(C)) ;
- indiquer dans la pluralité de signaux Sg1 émis un numéro N_ID de canal C pour permettre le tri entre les canaux C (TAG(N_ID)).

Selon ce premier mode de réalisation non limitatif, l'unité de traitement secondaire U2 est configurée pour :
- réaliser sur chaque canal de communication C une pluralité de mesures de puissance RSSI de ladite pluralité de signaux reçus Sg1' correspondant à ladite pluralité de signaux émis Sg1 (fonction illustrée sur la figure 3a MEAS(RSSI, Sg1 ', C)).

Par ailleurs, l'unité de traitement secondaire U2 est en outre configurée pour, pour chaque canal de communication C, comparer une combinaison Cb de ladite pluralité de mesures de puissance RSSI (fonction illustrée sur la figure 3a COMP(C, RSSI, P1, P2)) :
- avec une puissance seuil primaire P1 de passage de l'intérieur vers l'extérieur du véhicule automobile V ; et
- avec une puissance seuil secondaire P2 de passage de l'extérieur vers l'intérieur dudit véhicule automobile V.

Dans un mode de réalisation non limitatif, ladite unité de traitement secondaire U2 est en outre configurée pour :
- lisser ladite pluralité de mesures de puissance RSSI pour chaque canal C (fonction illustrée en pointillés sur la figure 3a LISS(RSSI, C).

Ladite unité de traitement secondaire U2 est en outre configurée pour :
- autoriser le démarrage dudit véhicule automobile V si pour chaque canal la combinaison de mesures de puissance RSSI est supérieure ou égale à ladite puissance seuil secondaire P2 (fonction illustrée sur la figure 3a AUT-FORB(Dem))) ;
- interdire le démarrage dudit véhicule automobile V si pour chaque canal la combinaison de mesures de puissance RSSI est inférieure ou égale à ladite puissance seuil primaire P1 (fonction illustrée sur la figure 3a AUT-FORB(Dem)).

Enfin, dans un mode de réalisation non limitatif, ladite unité de traitement secondaire U2 est en outre configurée pour réaliser la phase de calibrage Ph0 décrite précédemment avec la définition de ladite puissance seuil primaire P1 et de ladite puissance seuil secondaire P2 (fonctions illustrées sur la figure 3a DEF(C, P1, Ph0(Por)) et DEF(C, P2, Ph0(Por))). On notera que les fonctions réalisées lors de la phase de calibrage Ph0 n'ont pas toutes été illustrées sur les figures 3a et 3b.

### • Deuxième mode de réalisation

Dans ce deuxième mode de réalisation non limitatif, les fonctions réalisées par l'antenne primaire A1 dans le premier mode de réalisation non limitatif, sont réalisées par l'antenne secondaire A2, et vice et versa, et les fonctions réalisées par l'unité de traitement primaire U1 sont réalisées par l'unité de traitement secondaire U2 et vice et versa.

On notera que dans d'autres modes de réalisation non limitatifs, on peut avoir toute autre combinaison de réalisation des fonctions citées (mesures RSSI, lissage, comparaison, autorisation/interdiction de démarrage) par l'une ou l'autre des deux unités de traitement secondaire U2 et primaire U1.

Bien entendu la description de l'invention n'est pas limitée à l'application, aux modes de réalisation et aux exemples décrits ci-dessus. Ainsi, dans un autre mode de réalisation non limitatif, la fonction de démarrage Dem peut être remplacée par une autre fonction, et l'autre des deux unités de traitement secondaire U2 ou primaire U1 est configurée pour :
- autoriser ladite fonction dudit véhicule automobile V si pour chaque canal la combinaison de mesures de puissance RSSI est supérieure ou égale à ladite puissance seuil secondaire P2 ;
- interdire ladite fonction dudit véhicule automobile V si pour chaque canal la combinaison de mesures de puissance RSSI est inférieure ou égale à ladite puissance seuil primaire P1.

Ainsi, dans un autre mode de réalisation non limitatif, le seuil d'hystérésis Hy est différent pour chacun des canaux C37, C38 et C39.

Ainsi, l'invention décrite présente notamment les avantages suivants :
- elle permet de déterminer un identifiant à l'intérieur ou à l'extérieur de l'habitacle H d'un véhicule automobile V de façon précise ;
- elle évite les fausses détections ;
- elle permet d'utiliser des identifiants Id qui sont des téléphones mobiles ;
- elle permet d'utiliser la technologie Bluetooth Low Energy^{™}. On utilise ainsi la même antenne coté véhicule et côté identifiant. Il n'est pas nécessaire d'utiliser une antenne différente pour l'accès et une antenne supplémentaire pour le démarrage ;
- elle permet un calibrage côté identifiant Id ou côté véhicule automobile.

## Revendications

1. Procédé de détection (PR) d'un identifiant (Id) à l'intérieur ou à l'extérieur d'un véhicule automobile (V), ledit véhicule automobile (V) comprenant une antenne primaire (A1) et une unité de traitement primaire (U1), ledit identifiant (Id) comprenant une antenne secondaire (A2) et une unité de traitement secondaire (U2), selon lequel ledit procédé de détection (PR) comporte :
- l'émission cyclique par l'une des deux antennes primaire (A1) ou secondaire (A2) d'une pluralité de signaux, Sg1, sur une pluralité de canaux de communication (C) ;
- la réception cyclique par l'autre des deux antennes primaire (A1) ou secondaire (A2) de ladite pluralité de signaux émis, Sg1 ;
- la réalisation par l'une des deux unités de traitement secondaire (U2) ou primaire (U1) pour chaque canal de communication (C) d'une pluralité de mesures de puissance, RSSI, de ladite pluralité de signaux reçus, Sg1, correspondant à ladite pluralité de signaux émis, Sg1 ;
- pour chaque canal de communication (C), la comparaison par l'une des deux unités de traitement secondaire (U2) ou primaire (U1) d'une combinaison, Cb, de ladite pluralité de mesures de puissance, RSSI, réalisées sur ledit canal de communication (C) :
- avec une puissance seuil primaire (P1) de passage de l'intérieur vers l'extérieur du véhicule automobile (V), ladite puissance seuil primaire (P1) étant différente d'un canal de communication (C) à l'autre ; et
- avec une puissance seuil secondaire (P2) de passage de l'extérieur vers l'intérieur dudit véhicule automobile (V), ladite puissance seuil secondaire (P2) étant différente d'un canal de communication (C) à l'autre ;
- si pour au moins un canal de communication (C), ladite combinaison, Cb, de ladite pluralité de mesures de puissance, RSSI, réalisées sur ledit canal de communication (C) est supérieure ou égale à la ladite puissance seuil secondaire (P2), ledit identifiant (Id) est détecté comme étant à l'intérieur dudit véhicule automobile (V), sinon ledit identifiant (Id) est détecté comme se trouvant dans son état antérieur, à l'intérieur ou à l'extérieur; et
- si pour au moins un canal de communication (C), ladite combinaison, Cb, de ladite pluralité de mesures de puissance, RSSI, réalisées sur ledit canal de communication (C) est inférieure ou égale à la ladite puissance seuil primaire (P1), ledit identifiant (Id) est détecté comme étant à l'extérieur dudit véhicule automobile (V), sinon ledit identifiant (Id) est détecté comme se trouvant dans son état antérieur, à intérieur ou à l'extérieur.

2. Procédé de détection (PR) selon la revendication 1, selon lequel ladite combinaison (Cb) de ladite pluralité de mesures de puissance (RSSI) est calculée en fonction d'une moyenne (AVG) desdites mesures de puissance (RSSI).

3. Procédé de détection (PR) selon la revendication 1 ou la revendication 2, selon lequel ledit procédé de détection (PR) comprend en outre le lissage de ladite pluralité de mesures de puissance (RSSI) pour chaque canal de communication (C).

4. Procédé de détection (PR) selon l'une quelconque des revendications 1 à 3, selon lequel ledit procédé de détection (PR) comprend en outre une phase de calibrage (Ph0) comprenant :
- la définition pour chaque canal de communication (C) de ladite puissance seuil primaire (P1) lorsque ledit identifiant (Id) est disposé à une position de référence (Por) dans l'habitacle (H) dudit véhicule automobile (V) ;
- la définition pour chaque canal de communication (C) de ladite puissance seuil secondaire (P2) lorsque ledit identifiant (Id) est disposé à une position de référence (Por) dans l'habitacle (H) dudit véhicule automobile (V).

5. Procédé de détection (PR) selon l'une quelconque des revendications 1 à 4, selon lequel ladite puissance seuil secondaire (P2) est égale à l'écart-type (σ) multiplié par un facteur multiplicatif (Fo) de la valeur moyenne (AVG) d'une pluralité de mesures de puissances (RSSI) d'une pluralité de signaux reçus (Sg1') lors d'une phase de calibrage (Ph0).

6. Procédé de détection (PR) selon la revendication 5, selon lequel ladite puissance seuil primaire (P1) est égale à la puissance seuil secondaire (P2) plus un seuil d'hystérésis (Hy).

7. Procédé de détection (PR) selon l'une quelconque des revendications 1 à 6, selon lequel ledit identifiant (Id) communique avec ledit véhicule automobile (V) selon tout protocole de communication en bande de fréquence industrielle scientifique et médicale (ISM).

8. Procédé de détection (PR) selon l'une quelconque des revendications 1 à 7, selon lequel l'identifiant (Id) est un téléphone mobile.

9. Procédé de détection (PR) selon l'une quelconque des revendications 1 à 8, selon lequel ledit procédé de détection (PR) comprend en outre :
- l'autorisation du démarrage dudit véhicule automobile (V) si pour au moins un canal de communication (C) la combinaison (Cb) de mesures de puissance (RSSI) est supérieure ou égale à ladite puissance seuil secondaire (P2) ;
- l'interdiction du démarrage dudit véhicule automobile (V) si pour au moins un canal de communication (C) la combinaison (Cb) de mesures de puissance (RSSI) est inférieure ou égale à ladite puissance seuil primaire (P1).

10. Dispositif de détection (DISP) d'un identifiant (Id) à l'intérieur ou à l'extérieur d'un véhicule automobile (V), ledit véhicule automobile (V) comprenant une antenne primaire (A1) et une unité de traitement primaire (U1), ledit identifiant (Id) comprenant une antenne secondaire (A2) et une unité de traitement secondaire (U2), selon lequel ledit dispositif de détection (DISP) comprend lesdites antennes primaire (A1) et secondaire (A2) et lesdites unités de traitement primaire (U1) et secondaire (U2) et selon lequel :
- l'une des deux antennes primaire (A1) ou secondaire (A2) est configurée pour émettre cycliquement une pluralité de signaux, Sg1, sur une pluralité de canaux de communication (C) ;
- l'autre des deux antennes primaire (A1) ou secondaire (A2) est configurée pour recevoir cycliquement ladite pluralité de signaux émis, Sg1, par ladite antenne primaire (A1) ;
- l'une des deux unités de traitement secondaire (U2) ou primaire (U1) est configurée pour :
- réaliser pour chaque canal de communication (C) une pluralité de mesures de puissance, RSSI, de ladite pluralité de signaux reçus, Sg1', correspondant à ladite pluralité de signaux émis, Sg1 ;
- pour chaque canal de communication (C), comparer une combinaison, Cb, de ladite pluralité de mesures de puissance, RSSI, réalisées sur ledit canal de communication (C) :
- avec une puissance seuil primaire (P1) de passage de l'intérieur vers l'extérieur du véhicule automobile (V), ladite puissance seuil primaire (P1) étant différente d'un canal de communication (C) à l'autre ; et
- avec une puissance seuil secondaire (P2) de passage de l'extérieur vers l'intérieur dudit véhicule automobile (V), ladite puissance seuil secondaire (P2) étant différente d'un canal de communication (C) à l'autre ;
- si pour au moins un canal de communication (C), ladite combinaison, Cb, de ladite pluralité de mesures de puissance, RSSI, réalisées sur ledit canal de communication (C) est supérieure ou égale à la ladite puissance seuil secondaire (P2), ledit dispositif de détection est configuré pour détecter que ledit identifiant (Id) comme étant à l'intérieur dudit véhicule automobile (V), sinon ledit identifiant (Id) comme se trouvant dans son état antérieur, à l'intérieur ou à l'extérieur; et
- si pour au moins un canal de communication (C), ladite combinaison, Cb, de ladite pluralité de mesures de puissance, RSSI, réalisées sur ledit canal de communication (C) est inférieure ou égale à la ladite puissance seuil primaire (P1), ledit dispositif de détection est configuré pour détecter que ledit identifiant (Id) comme étant à l'extérieur dudit véhicule automobile (V), sinon ledit identifiant (Id) comme se trouvant dans son état antérieur à l'intérieur ou à l'extérieur.

11. Dispositif de détection (DISP) selon la revendication 10, selon lequel l'une des deux unités de traitement secondaire (U2) ou primaire (U1) est en outre configurée pour lisser ladite pluralité de mesures de puissance (RSSI) pour chaque canal de communication (C).

12. Dispositif de détection (DISP) selon la revendication 10 ou la revendication 11, selon lequel l'une des deux unités de traitement secondaire (U2) ou primaire (U1) est en outre configurée pour, lors de ladite phase de calibrage (Ph0) :
- définir pour chaque canal de communication (C) ladite puissance seuil primaire (P1) lorsque ledit identifiant (Id) est disposé à une position de référence (Por) dans l'habitacle (H) dudit véhicule automobile (V) ;
- définir pour chaque canal de communication (C) ladite puissance seuil secondaire (P2) lorsque ledit identifiant (Id) est disposé à une position de référence (Por) dans l'habitacle (H) dudit véhicule automobile (V).

13. Dispositif de détection (DISP) selon l'une quelconque des revendications 10 à 12, selon lequel l'une des deux unités de traitement secondaire (U2) ou primaire (U1) est en outre configurée pour :
- autoriser le démarrage dudit véhicule automobile (V) si pour au moins un canal de communication (C) la combinaison (Cb) de mesures de puissance (RSSI) est supérieure ou égale à ladite puissance seuil secondaire (P2) ;
- interdire le démarrage dudit véhicule automobile (V) si pour au moins un canal de communication (C) la combinaison (Cb) de mesure de puissance (RSSI) est inférieure ou égale à ladite puissance seuil primaire (P1).

## Patentansprüche

1. Erkennungsverfahren (PR) zur Erkennung eines Identifizierers (Id) innerhalb oder außerhalb eines Kraftfahrzeugs (V), wobei das Kraftfahrzeug (V) eine primäre Antenne (A1) und eine primäre Verarbeitungseinheit (U1) aufweist, wobei der Identifizierer (Id) eine sekundäre Antenne (A2) und eine sekundäre Verarbeitungseinheit (U2) aufweist, wobei das Erkennungsverfahren (PR) umfasst:
- das zyklische Senden einer Mehrzahl von Signalen, Sg1, über eine Mehrzahl von Kommunikationskanälen (C) durch die eine der beiden primären (A1) oder sekundären (A2) Antennen;
- das zyklische Empfangen der Mehrzahl von gesendeten Signalen, Sg1, durch die andere der beiden primären (A1) oder sekundären (A2) Antennen;
- das Durchführen einer Mehrzahl von Leistungsmessungen, RSSI, für die Mehrzahl von empfangenen Signalen, Sg1', die der Mehrzahl von gesendeten Signalen, Sg1, entsprechen, für jeden Kommunikationskanal (C) durch die eine der beiden sekundären (U2) oder primären (U1) Verarbeitungseinheiten;
- für jeden Kommunikationskanal (C) das Vergleichen einer Kombination, Cb, der Mehrzahl von Leistungsmessungen, RSSI, die an dem Kommunikationskanal (C) durchgeführt wurden, durch die eine der beiden sekundären (U2) oder primären (U1) Verarbeitungseinheiten:
- mit einer primären Schwellenleistung (P1) für den Übergang von innerhalb nach außerhalb des Kraftfahrzeugs (V), wobei die primäre Schwellenleistung (P1) von einem Kommunikationskanal (C) zum anderen verschieden ist; und
- mit einer sekundären Schwellenleistung (P2) für den Übergang von außerhalb nach innerhalb des Kraftfahrzeugs (V), wobei die sekundäre Schwellenleistung (P2) von einem Kommunikationskanal (C) zum anderen verschieden ist;
- wenn für mindestens einen Kommunikationskanal (C) die Kombination, Cb, der Mehrzahl von Leistungsmessungen, RSSI, die an dem Kommunikationskanal (C) durchgeführt wurden, größer als oder gleich der sekundären Schwellenleistung (P2) ist, wird der Identifizierer (Id) als innerhalb des Kraftfahrzeugs (V) befindlich erkannt; ansonsten wird der Identifizierer (Id) als sich in seinem vorherigen Zustand, innerhalb oder außerhalb, befindend erkannt; und
- wenn für mindestens einen Kommunikationskanal (C) die Kombination, Cb, der Mehrzahl von Leistungsmessungen, RSSI, die an dem Kommunikationskanal (C) durchgeführt wurden, kleiner als oder gleich der primären Schwellenleistung (P1) ist, wird der Identifizierer (Id) als außerhalb des Kraftfahrzeugs (V) befindlich erkannt; ansonsten wird der Identifizierer (Id) als sich in seinem vorherigen Zustand, innerhalb oder außerhalb, befindend erkannt.

2. Erkennungsverfahren (PR) nach Anspruch 1, wobei die Kombination (Cb) der Mehrzahl von Leistungsmessungen (RSSI) in Abhängigkeit von einem Mittelwert (AVG) der Leistungsmessungen (RSSI) berechnet wird.

3. Erkennungsverfahren (PR) nach Anspruch 1 oder Anspruch 2, wobei das Erkennungsverfahren (PR) ferner das Glätten der Mehrzahl von Leistungsmessungen (RSSI) für jeden Kommunikationskanal (C) umfasst.

4. Erkennungsverfahren (PR) nach einem der Ansprüche 1 bis 3, wobei das Erkennungsverfahren (PR) ferner eine Kalibrierungsphase (Ph0) umfasst, die umfasst:
- das Definieren, für jeden Kommunikationskanal (C), der primären Schwellenleistung (P1), wenn der Identifizierer (Id) in einer Referenzposition (Por) in dem Innenraum (H) des Kraftfahrzeugs (V) angeordnet ist;
- das Definieren, für jeden Kommunikationskanal (C), der sekundären Schwellenleistung (P2), wenn der Identifizierer (Id) in einer Referenzposition (Por) in dem Innenraum (H) des Kraftfahrzeugs (V) angeordnet ist.

5. Erkennungsverfahren (PR) nach einem der Ansprüche 1 bis 4, wobei die sekundäre Schwellenleistung (P2) gleich der Standardabweichung (σ), multipliziert mit einem Multiplikationsfaktor (Fσ), des Mittelwerts (AVG) einer Mehrzahl von Leistungsmessungen (RSSI) einer Mehrzahl von empfangenen Signalen (Sg1') bei einer Kalibrierungsphase (Ph0) ist.

6. Erkennungsverfahren (PR) nach Anspruch 5, wobei die primäre Schwellenleistung (P1) gleich der sekundären Schwellenleistung (P2) plus einer Hystereseschwelle (Hy) ist.

7. Erkennungsverfahren (PR) nach einem der Ansprüche 1 bis 6, wobei der Identifizierer (Id) mit dem Kraftfahrzeug (V) gemäß jedem Kommunikationsprotokoll im industriellen, wissenschaftlichen und medizinischen Frequenzband (ISM) kommuniziert.

8. Erkennungsverfahren (PR) nach einem der Ansprüche 1 bis 7, wobei der Identifizierer (Id) ein Mobiltelefon ist.

9. Erkennungsverfahren (PR) nach einem der Ansprüche 1 bis 8, wobei das Erkennungsverfahren (PR) ferner umfasst:
- das Zulassen des Startens des Kraftfahrzeugs (V), wenn für mindestens einen Kommunikationskanal (C) die Kombination (Cb) von Leistungsmessungen (RSSI) größer als oder gleich der sekundären Schwellenleistung (P2) ist;
- das Untersagen des Startens des Kraftfahrzeugs (V), wenn für mindestens einen Kommunikationskanal (C) die Kombination (Cb) von Leistungsmessungen (RSSI) kleiner als oder gleich der primären Schwellenleistung (P1) ist.

10. Erkennungsvorrichtung (DISP) zur Erkennung eines Identifizierers (Id) innerhalb oder außerhalb eines Kraftfahrzeugs (V), wobei das Kraftfahrzeug (V) eine primäre Antenne (A1) und eine primäre Verarbeitungseinheit (U1) aufweist, wobei der Identifizierer (Id) eine sekundäre Antenne (A2) und eine sekundäre Verarbeitungseinheit (U2) aufweist, wobei die Erkennungsvorrichtung (DISP) die primären (A1) und sekundären (A2) Antennen und die primären (U1) und sekundären (U2) Verarbeitungseinheiten aufweist, wobei:
- die eine der beiden primären (A1) oder sekundären (A2) Antennen dazu ausgestaltet ist, zyklisch eine Mehrzahl von Signalen, Sg1, über eine Mehrzahl von Kommunikationskanälen (C) zu senden;
- die andere der beiden primären (A1) oder sekundären (A2) Antennen dazu ausgestaltet ist, die Mehrzahl von Signalen, Sg1, die von der primären Antenne (A1) gesendet werden, zyklisch zu empfangen;
- die eine der beiden sekundären (U2) oder primären (U1) Verarbeitungseinheiten dazu ausgestaltet ist:
- für jeden Kommunikationskanal (C) eine Mehrzahl von Leistungsmessungen, RSSI, für die Mehrzahl von empfangenen Signalen, Sg1', die der Mehrzahl von gesendeten Signalen, Sg1, entsprechen, durchzuführen;
- für jeden Kommunikationskanal (C) eine Kombination, Cb, der Mehrzahl von Leistungsmessungen, RSSI, die an dem Kommunikationskanal (C) durchgeführt wurden, zu vergleichen:
- mit einer primären Schwellenleistung (P1) für den Übergang von innerhalb nach außerhalb des Kraftfahrzeugs (V), wobei die primäre Schwellenleistung (P1) von einem Kommunikationskanal (C) zum anderen verschieden ist; und
- mit einer sekundären Schwellenleistung (P2) für den Übergang von außerhalb nach innerhalb des Kraftfahrzeugs (V), wobei die sekundäre Schwellenleistung (P2) von einem Kommunikationskanal (C) zum anderen verschieden ist;
- wenn für mindestens einen Kommunikationskanal (C) die Kombination, Cb, der Mehrzahl von Leistungsmessungen, RSSI, die an dem Kommunikationskanal (C) durchgeführt wurden, größer als oder gleich der sekundären Schwellenleistung (P2) ist, die Erkennungsvorrichtung dazu ausgestaltet ist, den Identifizierer (Id) als innerhalb des Kraftfahrzeugs (V) befindlich, ansonsten den Identifizierer (Id) als sich in seinem vorherigen Zustand, innerhalb oder außerhalb, befindend zu erkennen; und
- wenn für mindestens einen Kommunikationskanal (C) die Kombination, Cb, der Mehrzahl von Leistungsmessungen, RSSI, die an dem Kommunikationskanal (C) durchgeführt wurden, kleiner als oder gleich der primären Schwellenleistung (P1) ist, die Erkennungsvorrichtung dazu ausgestaltet ist, den Identifizierer (Id) als außerhalb des Kraftfahrzeugs (V) befindlich, ansonsten den Identifizierer (Id) als sich in seinem vorherigen Zustand, innerhalb oder außerhalb, befindend zu erkennen.

11. Erkennungsvorrichtung (DISP) nach Anspruch 10, wobei die eine der beiden sekundären (U2) oder primären (U1) Verarbeitungseinheiten ferner dazu ausgestaltet ist, die Mehrzahl von Leistungsmessungen (RSSI) für jeden Kommunikationskanal (C) zu glätten.

12. Erkennungsvorrichtung (DISP) nach Anspruch 10 oder Anspruch 11, wobei die eine der beiden sekundären (U2) oder primären (U1) Verarbeitungseinheiten ferner dazu ausgestaltet ist, bei der Kalibrierungsphase (Ph0):
- für jeden Kommunikationskanal (C) die primäre Schwellenleistung (P1) zu definieren, wenn der Identifizierer (Id) in einer Referenzposition (Por) in dem Innenraum (H) des Kraftfahrzeugs (V) angeordnet ist;
- für jeden Kommunikationskanal (C) die sekundäre Schwellenleistung (P2) zu definieren, wenn der Identifizierer (Id) in einer Referenzposition (Por) in dem Innenraum (H) des Kraftfahrzeugs (V) angeordnet ist.

13. Erkennungsvorrichtung (DISP) nach einem der Ansprüche 10 bis 12, wobei die eine der beiden sekundären (U2) oder primären (U1) Verarbeitungseinheiten ferner dazu ausgestaltet ist:
- das Starten des Kraftfahrzeugs (V) zuzulassen, wenn für mindestens einen Kommunikationskanal (C) die Kombination (Cb) von Leistungsmessungen (RSSI) größer als oder gleich der sekundären Schwellenleistung (P2) ist;
- das Starten des Kraftfahrzeugs (V) zu untersagen, wenn für mindestens einen Kommunikationskanal (C) die Kombination (Cb) von Leistungsmessungen (RSSI) kleiner als oder gleich der primären Schwellenleistung (P1) ist.

## Claims

1. Method (PR) for detecting an identifier (Id) inside or outside a motor vehicle (V), said motor vehicle (V) comprising a primary antenna (A1) and a primary processing unit (U1), said identifier (Id) comprising a secondary antenna (A2) and a secondary processing unit (U2), wherein said detecting method (PR) comprises:
- cyclic transmission by one of the two primary or secondary antennas (A1, A2) of a plurality of signals, Sg1, over a plurality of communication channels (C);
- cyclic reception by the other of the two primary or secondary antennas (A1, A2) of said plurality of transmitted signals, Sg1;
- performance by one of the two secondary or primary processing units (U2, U1), for each communication channel (C), of a plurality of measurements, RSSI, of a power of said plurality of received signals, Sg1', corresponding to said plurality of transmitted signals, Sg1;
- for each communication channel (C), comparison by one of the two secondary or primary processing units (U2, U1) of a combination, Cb, of said plurality of power measurements, RSSI, performed on said communication channel (C):
- with a primary threshold power (P1) of passage from inside to outside the motor vehicle (V), said primary threshold power (P1) being different from one communication channel (C) to another; and
- with a secondary threshold power (P2) of passage from outside to inside said motor vehicle (V), said secondary threshold power (P2) being different from one communication channel (C) to another;
- if, for at least one communication channel (C), said combination, Cb, of said plurality of power measurements, RSSI, performed on said communication channel (C) is greater than or equal to said secondary threshold power (P2), said identifier (Id) is detected as being inside said motor vehicle (V), otherwise said identifier (Id) is detected as being in its previous state, inside or outside; and
- if, for at least one communication channel (C), said combination, Cb, of said plurality of power measurements, RSSI, performed on said communication channel (C) is less than or equal to said primary threshold power (P1), said identifier (Id) is detected as being outside said motor vehicle (V), otherwise said identifier (Id) is detected as being in its previous state, inside or outside.

2. Detecting method (PR) according to Claim 1, wherein said combination (Cb) of said plurality of power measurements (RSSI) is computed based on an average (AVG) of said power measurements (RSSI).

3. Detecting method (PR) according to Claim 1 or Claim 2, wherein said detecting method (PR) further comprises smoothing said plurality of power measurements (RSSI) for each communication channel (C).

4. Detecting method (PR) according to any one of Claims 1 to 3, wherein said detecting method (PR) further comprises a calibrating phase (Ph0) comprising:
- definition for each communication channel (C) of said primary threshold power (P1) when said identifier (Id) is placed in a reference position (Por) in the passenger compartment (H) of said motor vehicle (V);
- definition for each communication channel (C) of said secondary threshold power (P2) when said identifier (Id) is placed in a reference position (Por) in the passenger compartment (H) of said motor vehicle (V).

5. Detecting method (PR) according to any one of Claims 1 to 4, wherein said secondary threshold power (P2) is equal to the standard deviation (σ) multiplied by a multiplication factor (Fσ) of the average value (AVG) of a plurality of power measurements (RSSI) of a plurality of signals (Sg1') received during a calibrating phase (Ph0).

6. Detecting method (PR) according to Claim 5, wherein said primary threshold power (P1) is equal to the secondary threshold power (P2) plus a hysteresis threshold (Hy).

7. Detecting method (PR) according to any one of Claims 1 to 6, wherein said identifier (Id) communicates with said motor vehicle (V) using any communication protocol employing the ISM frequency band, ISM being the acronym of Industrial, Scientific and Medical.

8. Detecting method (PR) according to any one of Claims 1 to 7, wherein said identifier (Id) is a mobile telephone.

9. Detecting method (PR) according to any one of Claims 1 to 8, wherein said detecting method (PR) further comprises:
- permitting said motor vehicle (V) to start if, for at least one communication channel (C), the combination (Cb) of power measurements (RSSI) is greater than or equal to said secondary threshold power (P2);
- preventing said motor vehicle (V) from starting if, for at least one communication channel (C), the combination (Cb) of power measurements (RSSI) is less than or equal to said primary threshold power (P1).

10. Device (DISP) for detecting an identifier (Id) inside or outside a motor vehicle (V), said motor vehicle (V) comprising a primary antenna (A1) and a primary processing unit (U1), said identifier (Id) comprising a secondary antenna (A2) and a secondary processing unit (U2), wherein said detecting device (DISP) comprises said primary and secondary antennas (A1, A2) and said primary and secondary processing units (U1, U2), and wherein:
- one of the two primary or secondary antennas (A1, A2) is configured to cyclically transmit a plurality of signals, Sg1, over a plurality of communication channels (C) ;
- the other one of the two primary or secondary antennas (A1, A2) is configured to cyclically receive said plurality of signals, Sg1, transmitted by said primary antenna (A1);
- one of the two secondary or primary processing units (U2, U1) is configured to:
- perform, for each communication channel (C), a plurality of measurements, RSSI, of a power of said plurality of received signals, Sg1', corresponding to said plurality of transmitted signals, Sg1;
- compare, for each communication channel (C), a combination, Cb, of said plurality of power measurements, RSSI, performed on said communication channel (C):
- with a primary threshold power (P1) of passage from inside to outside the motor vehicle (V), said primary threshold power (P1) being different from one communication channel (C) to another; and
- with a secondary threshold power (P2) of passage from outside to inside said motor vehicle (V), said secondary threshold power (P2) being different from one communication channel (C) to another;
- if, for at least one communication channel (C), said combination, Cb, of said plurality of power measurements, RSSI, performed on said communication channel (C) is greater than or equal to said secondary threshold power (P2), said detecting device is configured to detect said identifier (Id) as being inside said motor vehicle (V), otherwise said identifier (Id) is detected as being in its previous state, inside or outside; and
- if, for at least one communication channel (C), said combination, Cb, of said plurality of power measurements, RSSI, performed on said communication channel (C) is less than or equal to said primary threshold power (P1), said detecting device is configured to detect said identifier (Id) as being outside said motor vehicle (V), otherwise said identifier (Id) is detected as being in its previous state, inside or outside.

11. Detecting device (DISP) according to Claim 10, wherein one of the two secondary or primary processing units (U2, U1) is further configured to smooth said plurality of power measurements (RSSI) for each communication channel (C).

12. Detecting device (DISP) according to Claim 10 or Claim 11, wherein one of the two secondary or primary processing units (U2, U1) is further configured to, during said calibrating phase (Ph0):
- define, for each communication channel (C), said primary threshold power (P1) when said identifier (Id) is placed in a reference position (Por) in the passenger compartment (H) of said motor vehicle (V);
- define, for each communication channel (C), said secondary threshold power (P2) when said identifier (Id) is placed in a reference position (Por) in the passenger compartment (H) of said motor vehicle (V).

13. Detecting device (DISP) according to any one of Claims 10 to 12, wherein one of the two secondary or primary processing units (U2, U1) is further configured to:
- permit said motor vehicle (V) to start if, for at least one communication channel (C), the combination (Cb) of power measurements (RSSI) is greater than or equal to said secondary threshold power (P2);
- prevent said motor vehicle (V) from starting if, for at least one communication channel (C), the combination (Cb) of power measurements (RSSI) is less than or equal to said primary threshold power (P1).
